# DEMANDE DE BREVET EUROPEEN

(11) **EP 0 670 569 A1**
(43) Date de publication de la demande: **06.09.1995**
(21) Numéro de dépôt: 95400408.1
(22) Date de dépôt: 27.02.1995
(51) Int. Cl.: G11B 5/31, G11B 5/23

(54) **Procédé de réalisation d'une tête magnétique verticale et tête obtenue par ce procédé**

(30) Priorité: 01.03.1994 FR 9402330
(71) Demandeur: COMMISSARIAT A L'ENERGIE ATOMIQUE, 75015 Paris Cédex (FR)
(72) Inventeur: Gaud, Pierre, F-38120 Saint Egreve (FR); Sibuet, Henri, F-38120 Le Fontanil (FR); Desloges, Brigitte, F-38180 Seyssins (FR)
(74) Mandataire: Signore, Robert

(57) **Abrégé**

L'espaceur amagnétique (68) définissant l'entrefer est dans le même matériau que le substrat (50).

Application à l'enregistrement magnétique.

## Description

### Domaine technique

La présente invention a pour objet un procédé de réalisation d'une tête magnétique verticale et une tête obtenue par ce procédé.

Elle trouve une application privilégiée dans l'enregistrement vidéo grand public. Mais elle peut être utilisée aussi dans d'autres domaines, comme celui des sauvegardes de données ou celui des mémoires d'ordinateur.

### Etat de la technique antérieure

Un support d'enregistrement magnétique pour matériel vidéo, sauvegarde de données ou mémoire d'ordinateur, comprend de nombreuses pistes sur lesquelles sont inscrites des informations sous forme de domaines magnétiques.

Pour augmenter la densité d'informations, on augmente non seulement le nombre d'informations par unité de longueur de piste, mais encore le nombre de pistes. Pour cela, on diminue la largeur des pistes, et, simultanément, on réduit l'intervalle les séparant, jusqu'à les rendre jointives.

Aujourd'hui, répondant à ces objectifs, on trouve principalement sur le marché deux types de têtes, des têtes dites à "métal dans l'entrefer" (en anglais "Metal-in-Gap"), et des têtes dites "sandwich".

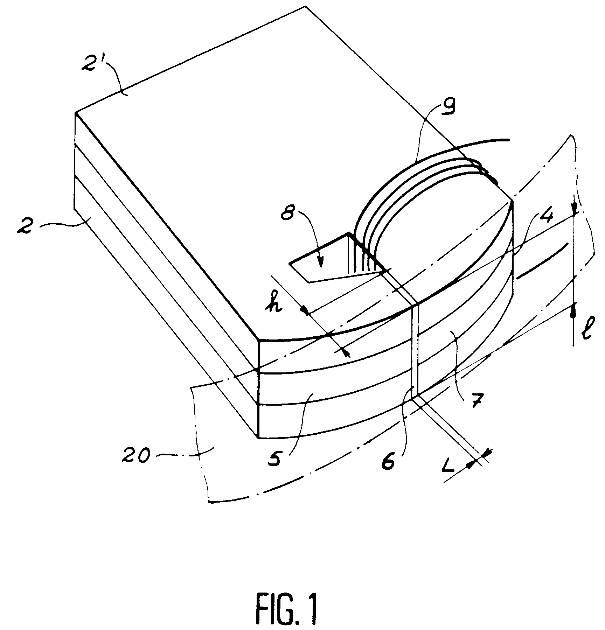

La figure 1 annexée illustre un exemple de tête de ce second type. La tête représentée comprend un substrat 2 supportant un circuit magnétique 4 constitué par une couche magnétique déposée sur la face supérieure du substrat, ce circuit présentant à l'avant, deux pièces polaires 5 et 7 séparées par un entrefer 6 qui est formé par un espaceur amagnétique. Cette tête comprend en outre au-dessus du circuit magnétique un superstrat 2' amagnétique. Par ailleurs, la tête comprend encore une ouverture 8 percée à travers la couche magnétique, le substrat et le superstrat, ainsi qu'un enroulement conducteur 9 empruntant l'ouverture 8.

La tête représentée sur la figure 1 est destinée à coopérer avec un support d'enregistrement 20 orienté perpendiculairement au substrat, (ou, ce qui revient au même, parallèlement à la tranche de celui-ci).

Ce genre de têtes peut donc être qualifié de "vertical" en ce sens que la surface active est perpendiculaire à la surface du substrat de départ.

La largeur de l'entrefer, notée ℓ, est comptée perpendiculairement au substrat (ou, ce qui revient au même, parallèlement au support d'enregistrement). Sa longueur,notée L, est comptée dans le sens du déplacement relatif de la tête et du support. Quant à la hauteur de l'entrefer, notée h, elle est comptée parallèlement à la face du substrat supportant le circuit magnétique. En cas d'usure de la tête, c'est la hauteur h qui se réduit.

On ne confondra pas ce genre de têtes avec les têtes dites "horizontales" où l'entrefer affleure sur la face supérieure parallèle au substrat et où le support d'enregistrement se déplace parallèlement à cette face du substrat. Une tête horizontale est décrite par exemple dans le document FR-A-2 604 021.

L'une des différences essentielles entre les têtes verticales de type sandwich et les têtes horizontales, outre des différences évidentes dans leur structure et leur procédé de réalisation, tient à ce que, dans ces dernières, la largeur de l'entrefer (correspondant à la largeur de la piste) est définie par lithographie, tandis que la dimension affectée lors de l'usure de la tête est définie par l'épaisseur du matériau magnétique déposé. Dans les têtes verticales de type sandwich, au contraire, c'est la largeur de l'entrefer qui est définie par l'épaisseur du matériau magnétique, tandis que l'usure maximum admissible est ajustée par lithographie.

La réalisation pratique des têtes verticales de type sandwich telles que celle de la figure 1 implique un grand nombre d'opérations de micromécanique et de soudures à haute température, le plus souvent de manière unitaire.

Certains procédés de réalisation sont notamment décrits dans l'ouvrage intitulé "Recent Magnetics for Electronics", JARECT, vol. 10, chapitre 11, p. 121-133, 1983, édité par Y. SAKURAI, North-Holland, et encore dans l'ouvrage intitulé "The Complete Handbook of Magnetic Recording", F. JORGENSEN, chapitre 9, p. 196-216, 1988, édité par TAS BOOKS Inc.

Cependant, il a été proposé, dans la demande internationale WO 92/02015, un procédé de réalisation de têtes magnétiques du type "sandwich", qui permet d'obtenir un entrefer vertical très bien contrôlé, dont la largeur est égale à celle de la piste à lire ou à écrire, et avec un alignement des pièces polaires obtenu sans difficulté. Ces têtes magnétiques acceptent sans problème l'usure inévitable liée au frottement de la bande magnétique sur la tête.

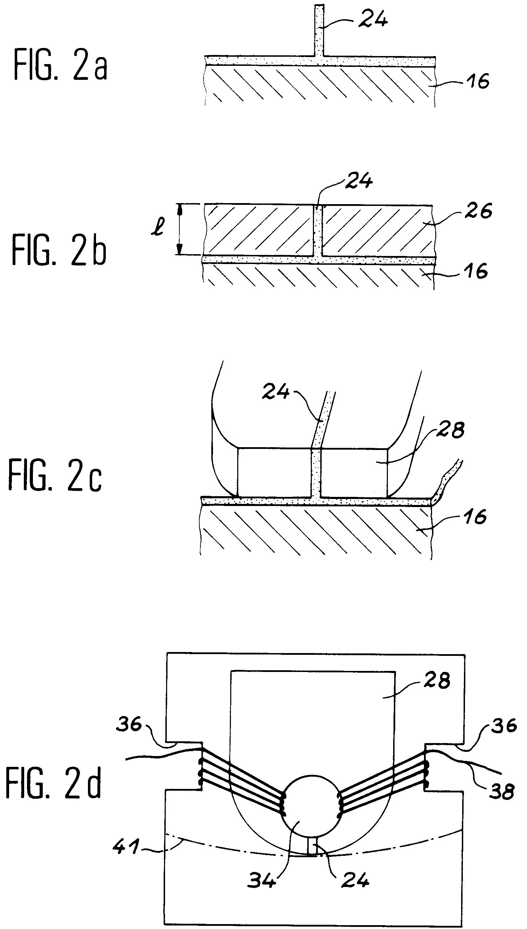

Les figures 2a à 2d annexées rappellent schématiquement en quoi consiste ce procédé connu. On part d'un substrat 16 et, par différentes opérations de gravure dont certaines sont anisotropes, ainsi que par un processus d'oxydation thermique, on finit par obtenir une paroi verticale 24 dressée sur le substrat (fig. 2a). Lorsque le substrat est en silicium, la paroi 24 est en oxyde de silicium, autrement dit en silice. Une couche magnétique 26 est ensuite déposée de part et d'autre de cette paroi, et est ensuite planarisée (fig. 2b). La paroi 24 joue alors le rôle d'espaceur amagnétique. Le circuit magnétique 28 est ensuite défini dans sa forme globale par photolithographie (fig. 2c) . L'ensemble est recouvert par un superstrat (non représenté) et percé d'une ouverture 34 (fig. 2d). Deux encoches 36 sont usinées et un conducteur 38 est passé dans l'ouverture 34, dans les encoches 36, et enroulé autour du circuit magnétique 28. Une surface de frottement 41 est finalement usinée dans l'ensemble. Cette surface est perpendiculaire à la face supérieure du substrat. L'espaceur 24 affleure donc sur la tranche du substrat usiné et se trouve parallèle au support d'enregistrement (non représenté mais perpendiculaire au plan de la figure).

Bien que satisfaisant à certains égards, ce procédé présente un inconvénient. En effet, l'espaceur 24 obtenu est en oxyde thermique. Or, on constate que cela pose des problèmes de stabilité ou de rectitude, dans le cas où le rapport entre la largeur ℓ et la longueur L de l'espaceur est important (en pratique supérieur à 20). Cet effet est dû à une libération des contraintes présentes dans l'espaceur lors de la deuxième gravure du silicium, le pied de l'espaceur étant fixe tandis que son sommet est libre. La cause en est la différence de nature entre le silicium et son oxyde thermique (en particulier, différence des coefficients de dilatation).

Le document cité WO-92/02015 propose d'autres modes de mise en oeuvre, dans lesquels on dépose d'abord un matériau magnétique sur un côté de la paroi verticale d'oxyde, avant d'effectuer la seconde gravure du silicium. Mais le procédé correspondant est complexe et multiplie les séquences lithographie-gravure-planarisation. Il ne convient donc guère.

La présente invention a justement pour but de remédier à ces inconvénients.

### Exposé de l'invention

Selon l'invention, on réalise un espaceur qui n'est plus en oxyde thermique mais qui est dans le matériau même constituant le substrat, par exemple en silicium si le substrat est en ce matériau. Par ailleurs, les opérations sont simples et le circuit magnétique est réalisé en une seule étape.

De façon précise, la présente invention a pour objet un procédé de réalisation de têtes magnétiques, du genre de celles qui viennent d'être définies, et qui est caractérisé par le fait qu'il comprend les opérations suivantes :
- on effectue une gravure du substrat à travers un premier masque pour former un pré-caisson de faible profondeur,
- on forme dans ce pré-caisson une couche mince de matériau apte à constituer un masque pour une gravure ultérieure du substrat,
- on élimine cette couche mince sur au moins une partie du fond du pré-caisson en la laissant subsister au moins le long de l'une des parois verticales du pré-caisson,
- on définit un second masque avec une ouverture qui laisse dégagé le pré-caisson et le substrat côté paroi verticale recouverte par la couche mince,
- on grave l'ensemble à travers ce second masque, la couche mince subsistant contre la paroi servant de masque et préservant sous elle une paroi verticale formée du matériau constituant le substrat, cette gravure faisant apparaître un premier caisson et un second caisson séparés par la paroi verticale en matériau constituant le substrat,
- on élimine les couches restantes situées au-dessus du substrat,
- on remplit le premier et le second caissons avec un matériau magnétique,
- on planarise l'ensemble parallèlement au substrat au moins jusqu'à la paroi verticale, ce qui laisse deux pièces polaires séparées par la paroi verticale, laquelle constitue ainsi l'espaceur amagnétique de la tête,
- on dépose un superstrat,
- on usine l'ensemble pour définir une surface de frottement perpendiculaire à la surface du substrat, l'espaceur amagnétique affleurant sur cette surface de frottement.

Ce procédé peut utiliser tout type de bobinage conducteur et notamment un enroulement conducteur bobiné à travers une ouverture (comme dans le cas de la figure 1).

La présente invention a également pour objet une tête obtenue par le procédé qui vient d'être défini. Cette tête est caractérisée par le fait que son entrefer est constitué par un espaceur amagnétique réalisé dans le matériau même constituant le substrat. Il y a donc parfaite compatibilité entre le substrat et l'espaceur.

Lorsque le substrat est en silicium, l'entrefer est constitué par une paroi verticale de silicium.

### Brève description des dessins

- la figure 1, déjà décrite, montre une tête magnétique verticale selon l'art antérieur,
- les figures 2a, 2b, 2c et 2d montrent quatre stades d'un procédé connu de réalisation d'une tête magnétique verticale,
- les figures 3a à 3q montrent diverses étapes d'un procédé de réalisation conforme à l'invention,
- les figures 4a à 4c représentent une variante de réalisation du dépôt magnétique,
- les figures 5a et 5b représentent l'utilisation d'un substrat avec une couche d'arrêt enterrée.

### Exposé détaillé d'un mode de réalisation

Dans la description qui suit, on supposera, à titre non limitatif, que le substrat utilisé est en silicium, est plus spécialement en silicium monocristallin d'orientation cristallographique <110>.

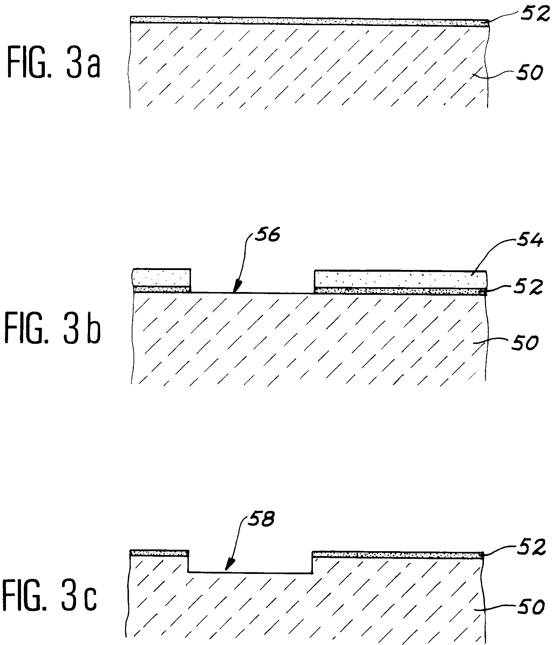

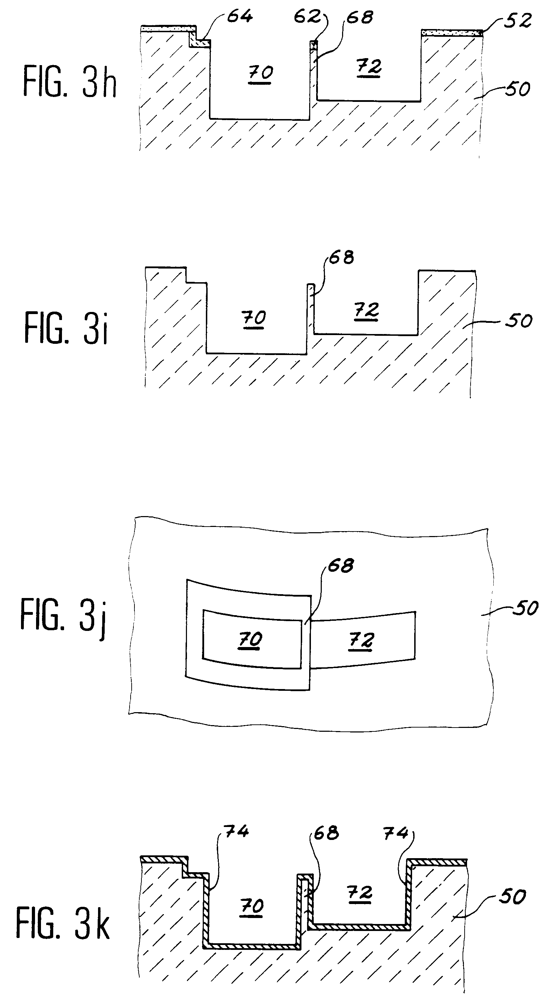

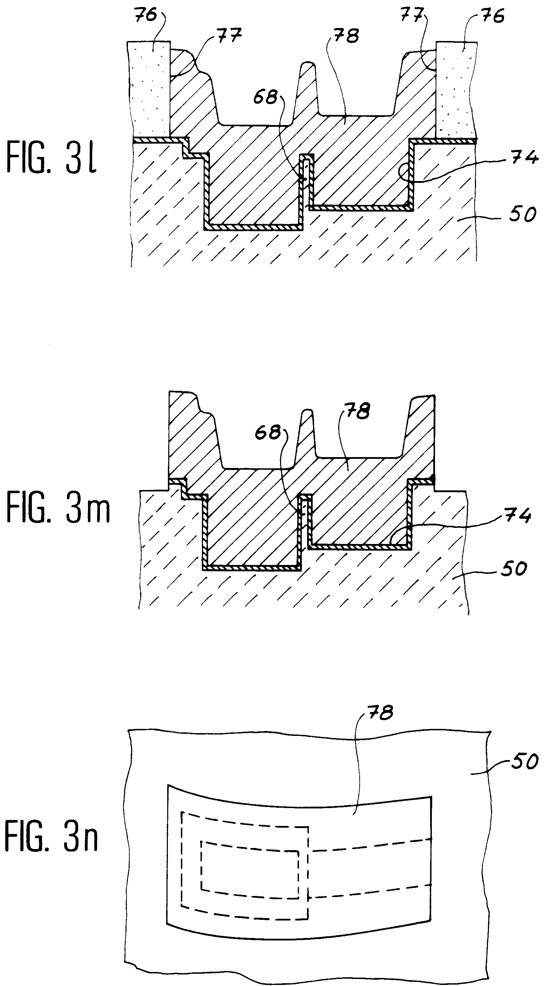

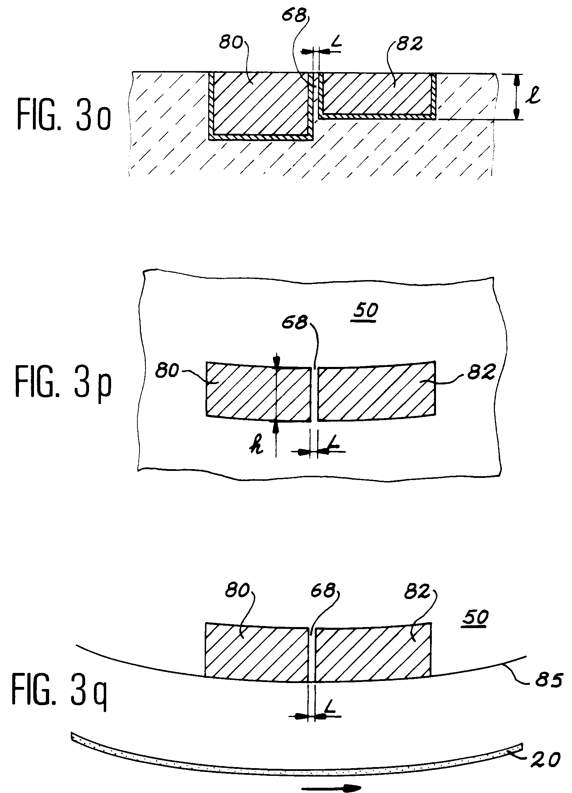

On part donc d'un tel substrat, référencé 50 sur la figure 3a et l'on dépose un premier masque de gravure 52, par exemple en nitrure de silicium. Ce premier masque peut être obtenu par dépôt chimique en phase vapeur à basse pression. Son épaisseur peut être de 40 nm environ.

Par photolithographie utilisant une couche 54 de résine, on pratique une ouverture 56 dans le premier masque de nitrure de silicium (fig. 3b). Cette gravure peut être une gravure ionique réactive.

On enlève ensuite le masque de résine 54, par exemple chimiquement, avec une solution d'acide nitrique.

Puis on grave le substrat de silicium (fig. 3c) pour obtenir un pré-caisson 58 de quelques dixièmes de microns de profondeur. Pour ce faire, on emploie, par exemple, une solution de KOH de concentration 40% et à 70°C. Lorsque le substrat ne comporte pas de couche d'arrêt enterrée, la profondeur de ce pré-caisson est fonction de la géométrie recherchée. Il s'agit de rechercher un compromis entre une faible profondeur, qui minimisera la dissymétrie des pièces polaires qui seront obtenues finalement de chaque côté de l'espaceur et une gravure plus profonde, qui facilitera l'obtention ultérieure du masque nécessaire à la gravure du silicium pour la définition de l'espaceur. Par exemple, pour une épaisseur finale de caisson de 5 µm, une profondeur de 0,3 µm pourra être retenue pour le pré-caisson 58.

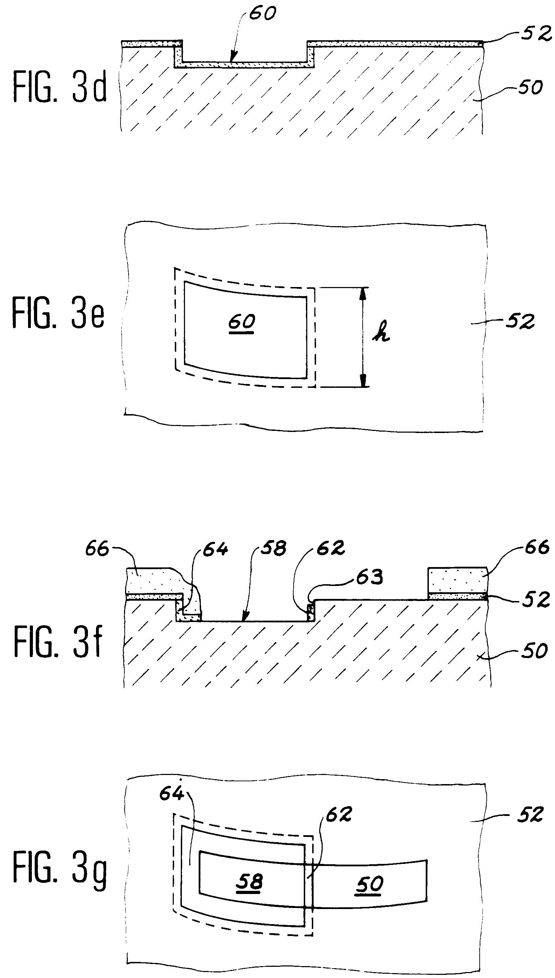

On dépose ensuite une couche 60 d'un matériau pouvant servir de masque à une opération ultérieure de gravure du silicium (fig. 3d). On peut, par exemple, effectuer une oxydation thermique du silicium, auquel cas la couche 60 est en oxyde de silicium (silice). L'épaisseur de la couche 60 est directement liée à la longueur de l'entrefer désiré (comptée dans le sens défilement du support d'enregistrement, c'est-à-dire horizontalement sur la figure 3d) . Par exemple, une oxydation thermique de 0,3 µm peut être effectuée, pour une longueur d'entrefer souhaitée de 0,2 µm.

Les figures 3a à 3d décrites jusqu'ici sont des coupes suivant un plan parallèle au plan du futur support d'enregistrement, autrement dit des coupes perpendiculaires à la face supérieure du substrat de silicium. La figure 3e, en revanche, est une vue de dessus de l'ensemble. On y voit le masque en nitrure de silicium 52 et son ouverture dans laquelle le pré-caisson a été gravé, avec la couche d'oxyde de silicium 60 qui tapisse ce pré-caisson. La dimension marquée h représente ce qui a été appelé à propos de la figure 1 la "hauteur" du futur entrefer. Cette dimension n'est pas critique. Elle évolue d'ailleurs en diminuant au fur et à mesure de l'usure de la tête.

On effectue ensuite une gravure anisotrope du masque initial 52 et du matériau 60. Pour cela, on dépose un masque de résine 66 et l'on définit une ouverture qui dégage le pré-caisson et la face supérieure du substrat sur l'un des côtés du pré-caisson (fig. 3f). Par gravure ionique réactive, le nitrure de silicium 52 est enlevé ainsi que le matériau 60, lequel ne subsiste que sur les parois latérales du pré-caisson (notamment sur la paroi de droite 63), sous la forme de couches 62 et 64. Le masque 66 peut être enlevé à ce stade du procédé par tout moyen connu.

La figure 3g montre l'ensemble obtenu à ce stade en vue de dessus. La couche 62 qui subsiste le long de la paroi 63 va constituer un masque pour la gravure du silicium qui va suivre. Cette gravure est une gravure anisotrope, utilisant par exemple une solution de KOH en concentration 40%, à 70°C. La profondeur de cette gravure correspond à la largeur souhaitée de l'entrefer (comptée perpendiculairement au substrat, donc parallèlement au support d'enregistrement). Cette largeur doit correspondre à la largeur de la piste à lire.

Sur la figure 3h, on voit ainsi un premier et un second caissons, respectivement 70 et 72, séparés par une paroi verticale 68, qui a été épargnée dans la gravure en raison du masque 62. Cette paroi verticale 68 se trouve nécessairement constituée par le matériau constituant le substrat, en raison même de son mode de formation. Elle est donc en silicium, si le substrat est en ce matériau.

On supprime ensuite toutes les couches restantes situées au-dessus du substrat, c'est-à-dire aussi bien la couche 52 en nitrure de silicium et que les couches 62, 64 en oxyde de silicium. Cette suppression peut être obtenue, par exemple, par gravure ionique réactive. On obtient alors l'ensemble illustré figure 3i en coupe perpendiculaire à la surface supérieure du substrat et figure 3j en vue de dessus. Sur cette dernière figure, en particulier, on voit bien les deux caissons 70, 72 entourés du silicium constituant le substrat 50.

On dépose ensuite, de préférence par pulvérisation cathodique, une sous-couche d'accrochage électriquement conductrice 74, par exemple en fer-nickel (fig. 3k). Son épaisseur peut être d'environ 0,1 µm.

On dépose ensuite un troisième masque de résine 76 (fig. 3ℓ) dans lequel on ménage une ouverture 77 qui dégage les deux caissons 70, 72 et une partie du substrat autour des caissons. Dans cette ouverture, on fait croître électrolytiquement un matériau magnétique 78 en prenant la couche 74 comme électrode. L'épaisseur obtenue doit être supérieure à la profondeur des caissons, de sorte que le matériau magnétique 78 surmonte la paroi verticale 68. Par exemple, si les caissons ont une profondeur de 5 µm, on déposera 6 µm de matériau magnétique 78.

On enlève ensuite la résine 76 ayant constitué le troisième masque, par exemple par voie chimique à l'aide d'un solvant. La sous-couche en FeNi ayant servi à l'électrolyse est également éliminée sur le pourtour de la pièce magnétique 78, par exemple par usinage ionique. Cette dernière gravure attaque superficiellement le substrat au niveau de ce pourtour. L'ensemble obtenu est illustré figure 3m en coupe perpendiculaire à la surface du substrat et, figure 3n, en vue de dessus. Sur cette dernière, on voit la pièce magnétique 78 comme un îlot entouré de silicium.

On planarise alors l'ensemble jusqu'à atteindre la paroi verticale 68 pour séparer les matériaux magnétiques à l'intérieur des deux caissons. La figure 3o montre l'ensemble en coupe et la figure 3p en vue de dessus. On y voit le matériau matériau magnétique séparé en deux pièces polaires 80, 82 séparées par la paroi de silicium 68 qui joue le rôle d'espaceur amagnétique (la couche d'accrochage 74 déposée de part et d'autre de la paroi de silicium 68 ne fait pas partie de l'espaceur amagnétique puisque cette couche, étant en fer-nickel, est magnétique). La largeur de ces deux pièces polaires (comptée parallèlement à l'espaceur) n'est pas exactement la même en raison de la gravure du pré-caisson 58 illustrée sur la figure 3c. Mais cette différence est faible. La largeur noté ℓ sur la figure 3o correspond à la partie où les deux pièces polaires 80, 82 sont en regard l'une de l'autre. Cette largeur est la largeur d'entrefer, comptée parallèlement au support d'enregistrement.

Cet ensemble est alors recouvert par un superstrat (non représenté). Puis on termine la tête par des opérations classiques de réalisation d'un bobinage conducteur par exemple par perçage d'une ouverture et bobinage d'un fil conducteur.

La tête est ensuite complétée par un usinage destiné à définir la surface de frottement 65 (Fig. 3q) et éventuellement à définir un angle non nul entre la largeur de l'entrefer et la direction perpendiculaire au défilement du support.

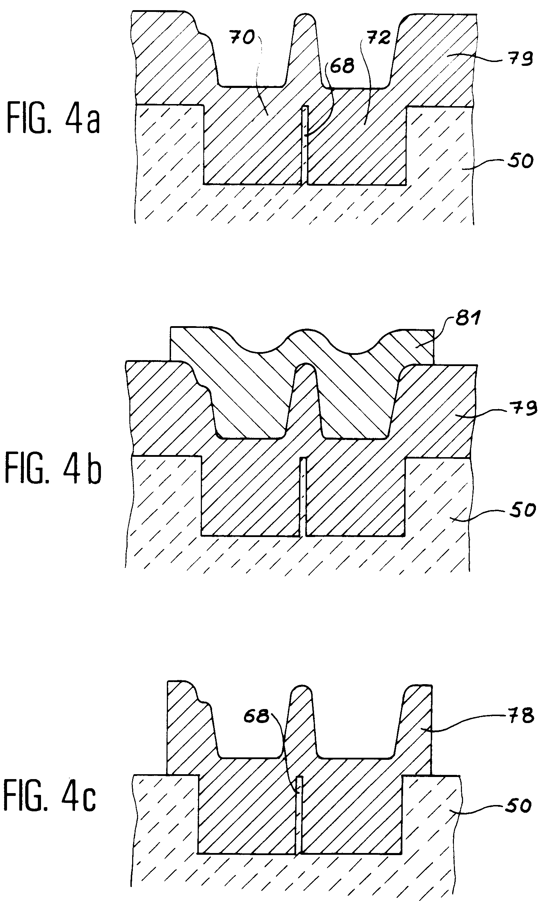

Il va de soi que la formation de la pièce magnétique 78 n'est pas nécessairement obtenue par croissance électrolytique par le biais d'une sous-couche conductrice, comme illustré sur les figures 3k à 3ℓ. On pourrait procéder notamment par dépôt en phase vapeur, par exemple par pulvérisation. C'est ce qui est illustré sur les figures 4a à 4c.

Sur la figure 4a, on suppose qu'on est parti du sous-ensemble de la figure 3i. On dépose un matériau magnétique 79 sur toute la surface (Fig. 4a). On dépose ensuite un masque 81 recouvrant les caissons 70 et 72 et le pourtour des caissons (Fig. 4b). On grave ensuite le matériau magnétique 79 à travers le masque 81 et on élimine ce dernier. On obtient le sous-ensemble de la figure 4c, qui correspond à celui de la figure 3m, la couche conductrice 74 en moins.

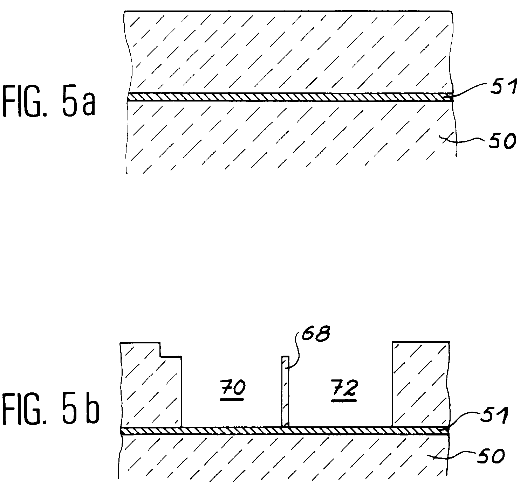

Pour éviter l'obtention de pièces polaires dissymétriques, c'est-à-dire présentant des largeurs différentes, une variante du procédé de l'invention consiste à utiliser un substrat 50 présentant une couche d'arrêt enterrée 51 (voir Fig. 5a). Ainsi, lors de l'étape de réalisation des premier et deuxième caissons, la gravure de ces derniers s'arrête sur cette couche malgré la présence du précaisson (voir Fig. 5b qui est équivalente à la Fig. 3i). Le reste du procédé reste inchangé.

Ce substrat avec couche enterrée peut être obtenu soit par implantation d'oxygène dans un substrat suivi d'un recuit de façon à obtenir une couche enterrée d'oxyde selon la technique connue "silicon on insulator" (SOI), soit par implantation de bore.

Lorsque l'épaisseur de la partie du substrat située au-dessus de la couche enterrée n'est pas suffisante après l'implantation pour réaliser la largeur voulue d'entrefer, une épitaxie du matériau constituant le substrat est alors réalisée.

Avantageusement, on choisit comme substrat un matériau monocristallin.

Le procédé de l'invention illustre la réalisation des pièces polaires du circuit magnétique ; cependant, le circuit magnétique complet peut être réalisé en même temps que ces pièces ou en plusieurs étapes de dépôts, ces dépôts devant intervenir avant le recouvrement du circuit par le superstrat.

Le procédé de réalisation de l'invention se prête bien à un mode de réalisation collectif de têtes tel que celui décrit, par exemple, dans la demande internationale WO 92/02015 déjà citée.

## Revendications

1. Procédé de réalisation d'une tête magnétique verticale dans lequel : on part d'un substrat (2), on dépose sur une face de ce substrat (2) une couche magnétique, on forme un circuit magnétique (4) avec un bobinage conducteur (9), ce circuit magnétique présentant une zone d'entrefer avec deux pièces polaires (5, 7) séparées par un espaceur amagnétique (6), cet espaceur affleurant sur la tranche du substrat (2), ce procédé étant caractérisé par le fait que, pour obtenir le circuit magnétique dans la zone de l'entrefer :
- on effectue une gravure du substrat (50) à travers un premier masque (54) pour former un pré-caisson (58) de faible profondeur,
- on forme dans ce pré-caisson (58) une couche mince (60) de matériau apte à constituer un masque pour une gravure ultérieure du substrat (50),
- on élimine cette couche mince (60) sur au moins une partie du fond du pré-caisson (58) en la laissant subsister (62, 64) au moins le long de l'une des parois verticales (63) du pré-caisson (58),
- on définit un second masque (66) avec une ouverture qui laisse dégagé le pré-caisson (58) et le substrat côté paroi verticale (63) recouverte par la couche mince (62),
- on grave l'ensemble à travers ce second masque, la couche mince (62) subsistant contre la paroi (63) servant de masque et préservant sous elle une paroi verticale (68) formée du matériau constituant le substrat (50), cette gravure faisant apparaître un premier caisson (70) et un second caisson (72) séparés par la paroi verticale (68) en matériau constituant le substrat,
- on élimine les couches restantes (52, 62, 64) situées au-dessus du substrat,
- on remplit le premier et le second caissons (70, 72) avec un matériau magnétique (78),
- on planarise l'ensemble parallèlement à la face du substrat au moins jusqu'à la paroi verticale (68), ce qui laisse subsister deux pièces polaires (80, 82) séparées par la paroi verticale (68) laquelle constitue ainsi l'espaceur amagnétique de la tête,
- on dépose un superstrat,
- on usine l'ensemble (50, 68, 80, 82) pour définir une surface de frottement (85) perpendiculaire à la surface du substrat, l'espaceur amagnétique (68) affleurant sur cette surface de frottement (85).

2. Procédé selon la revendication 1, caractérisé par le fait que, pour remplir le premier et le second caissons (70, 72), on dépose préalablement un troisième masque (76) avec une ouverture (77) dégageant les deux caissons (70, 72) et une partie du substrat autour des deux caissons (70, 72), on dépose une couche électriquement conductrice (74) sur l'ensemble à travers l'ouverture (77) du troisième masque (76) et on fait croître électrolytiquement un matériau magnétique (78) en utilisant cette couche conductrice (74) comme électrode, on enlève le troisième masque (76).

3. Procédé selon la revendication 1, caractérisé par le fait que pour remplir le premier et le second caissons, on dépose par dépôt physique en phase vapeur un matériau magnétique sur l'ensemble du substrat, on réalise sur ce dépôt un troisième masque et on grave le matériau magnétique de façon à le laisser subsister dans les deux caissons et sur une partie du substrat autour des deux caissons, on élimine enfin le troisième masque.

4. Procédé selon l'une quelconque des revendications 1 à 3, caractérisé par le fait que le substrat comporte une couche enterrée (51) réalisée par implantation, cette couche constituant une couche d'arrêt à la gravure des caissons.

5. Procédé selon la revendication 4, caractérisé par le fait que la partie du substrat au-dessus de la couche enterrée (51) est formée par un film mince sur lequel on a réalisé une épitaxie.

6. Procédé selon la revendication 1, caractérisé par le fait que le matériau constituant le substrat (50) est le silicium.

7. Tête magnétique verticale obtenue selon le procédé de la revendication 1, cette tête comprenant un substrat (2, 50) avec une face et une tranche, un circuit magnétique (4) disposé sur la face du substrat, avec un enroulement conducteur (9), ce circuit présentant une zone d'entrefer avec deux pièces polaires (5, 7) (80, 82) séparées par un espaceur amagnétique (6), cet espaceur affleurant sur la tranche du substrat (2), cette tête étant destinée à coopérer avec un support d'enregistrement (20) défilant devant l'espaceur (6) et orienté perpendiculairement à la face du substrat (2), cette tête étant caractérisée par le fait que l'espaceur amagnétique (68) est réalisé complétement dans le matériau même constituant le substrat (50) et est relié à ce substrat (50).

8. Tête magnétique verticale selon la revendication 7, caractérisée par le fait que le substrat (50) est en silicium ainsi que l'espaceur amagnétique (68).
